# EUROPÄISCHE PATENTANMELDUNG

(11) **EP 4 401 328 A1**
(43) Veröffentlichungstag der Anmeldung: **17.07.2024**
(21) Anmeldenummer: 23151414.2
(22) Anmeldetag: 12.01.2023
(51) Int. Cl.: H04B 7/04, H04B 7/06

(54) **DRAHTLOSES KOMMUNIKATIONSSYSTEM**

(71) Anmelder: Siemens AG Österreich, 1210 Wien (AT)
(72) Erfinder: Mayer, Lukas Walter, 1190 Wien (AT); Gila, Janos, 2340 Mödling (AT); Hofmann, Andreas, 1140 Wien (AT); Schiefer, Martin, 3100 St. Pölten (AT)
(74) Vertreter: Siemens Patent Attorneys

(57) **Zusammenfassung**

Drahtloses Kommunikationssystem, umfassend einen Sender (TRX1), einen Empfänger (TRX2) und einen ersten und zumindest einen zweiten elektronisch steuerbaren Reflektor (RIS2, RIS3), wobei der Sender (TRX1) dazu eingerichtet ist, ein jeweiliges Signal in Richtung des ersten Reflektors (RIS2) und des zumindest einen zweiten Reflektors (RIS3) zu senden, und der erste und der zumindest eine zweite Reflektor (RIS2, RIS3) dazu eingerichtet sind, das jeweilige Signal zu empfangen und in Richtung des Empfängers (TRX2) zu reflektieren, wobei der erste und der zumindest eine zweite Reflektor (RIS2, RIS3) ferner dazu eingerichtet sind, das jeweilige Signal innerhalb eines Winkel-Bereichs von einer jeweiligen ersten Grenze (B2A) zu einer jeweiligen zweiten Grenze (B2B) mit jeweils winkelabhängigen Reflexions-Faktoren zu reflektieren, wobei der jeweilige Signalpfad des jeweilig reflektierten Signals an der jeweiligen ersten Grenze (B2A) eine jeweilige erste Länge (LB2A) aufweist, und der jeweilige Signalpfad des jeweilig reflektierten Signals an der jeweiligen zweiten Grenze (B2B) eine jeweilige zweite Länge (LB2B) aufweist, und der jeweilige Signalpfad des jeweilig reflektierten Signals in der jeweilige Mitte zwischen der jeweiligen ersten und der jeweiligen zweiten Grenze (B2A, B2B) eine jeweilige mittlere Länge (LB2) aufweist, und eine jeweilige relative Längendifferenz (DL) zwischen der jeweiligen ersten Länge (LB2A) und der jeweiligen zweiten Länge (LB2B) zumindest 20% beträgt, und der erste und der zumindest eine zweite Reflektor (RIS2, RIS3) dazu eingerichtet sind, den jeweiligen winkelabhängigen Reflexions-Faktor an der jeweiligen ersten Grenze (B2A) gegenüber der jeweiligen mittleren Länge (LB2) zu vergrößern und den jeweiligen winkelabhängigen Reflexions-Faktor an der jeweiligen zweiten Grenze (B2A) zu verringern.

## Beschreibung

Die Erfindung betrifft ein drahtloses Kommunikationssystem.

Elektronisch steuerbare Reflektoren können vielfältig eingesetzt werden, beispielsweise um eine Signalausleuchtung von einem Sender an durch Hindernisse oder Objekte abgeschatteten Orten zu verbessern.

Dies kann beispielsweise in einer Industriehalle erfolgen, um die Empfangseigenschaften individueller Arbeitsbereiche mit dort eingesetzten Funk-Systemen, wie nach dem 5G-Standard, mithilfe eines jeweiligen elektronisch steuerbaren Reflektors zu verbessern, und eine Funk-Verbindung zu schaffen, welche über keine direkte Kommunikation zwischen Sender und Empfänger, also einer abgedeckten Verbindung (engl. "non-line of sight") verfügen

Ein elektronisch intelligent steuerbarer Reflektor kann sowohl in einem Reflexions-Winkel räumlich individuell, nämlich ein einem horizontalen Winkel Phi, als auch in einem vertikalen Winkel Theta voneinander getrennt und adaptiv verändert werden.

Damit können die Reflexionseigenschaften des Reflektors über einen gesamten Arbeitsbereich eingestellt werden.

Jedoch sind die möglichen Winkeleinstellungen für die Winkel Phi und Theta eher eng begrenzt, was die Anwendung eines intelligent und elektronisch steuerbaren Reflektors einschränkt.

Ferner kann die verfügbare Feldstärke des Empfangssignals nicht ausreichen, um einen guten Empfang sicherzustellen und eine zuverlässige Decodierung durchzuführen.

Es ist Aufgabe der Erfindung eine Anordnung eines drahtlosen Kommunikationssystems zu schaffen, welches einen verbesserten Anwendungsbereich erlaubt und auch eine höhere Systemverfügbarkeit bereitstellt.

Die Aufgabe wird durch ein drahtloses Kommunikationssystem gelöst, umfassend einen Sender, einen Empfänger und einen ersten elektronisch steuerbaren Reflektor an einem ersten Ort und zumindest einen zweiten elektronisch steuerbaren Reflektor an zumindest einem zweiten Ort, wobei der Sender dazu eingerichtet ist, ein jeweiliges Signal in Richtung des ersten Reflektors und des zumindest einen zweiten Reflektors zu senden, und der erste und der zumindest eine zweite Reflektor dazu eingerichtet sind, das jeweilige Signal zu empfangen und in Richtung des Empfängers zu reflektieren, wobei der erste und der zumindest eine zweite Reflektor ferner dazu eingerichtet sind, das jeweilige Signal innerhalb eines Winkel-Bereichs von einer jeweiligen ersten Grenze zu einer jeweiligen zweiten Grenze mit jeweils winkelabhängigen Reflexions-Faktoren zu reflektieren, wobei der jeweilige Signalpfad des jeweilig reflektierten Signals an der jeweiligen ersten Grenze eine jeweilige erste Länge aufweist, und der jeweilige Signalpfad des jeweilig reflektierten Signals an der jeweiligen zweiten Grenze eine jeweilige zweite Länge aufweist, und der jeweilige Signalpfad des jeweilig reflektierten Signals in der jeweiligen Mitte zwischen der jeweiligen ersten und der jeweiligen zweiten Grenze eine jeweilige mittlere Länge aufweist, und eine jeweilige relative Längendifferenz zwischen der jeweiligen ersten Länge und der jeweiligen zweiten Länge zumindest 20% beträgt, und der erste und der zumindest eine zweite Reflektor gemeinsam dazu eingerichtet sind, den jeweiligen winkelabhängigen Reflexions-Faktor an der jeweiligen ersten Grenze gegenüber der jeweiligen mittleren Länge zu vergrößern und den jeweiligen winkelabhängigen Reflexions-Faktor an der jeweiligen zweiten Grenze zu verringern.

Unter "jeweiligen" Längen, jeweiligen Signalpfaden, jeweiligen reflektierten Signalen, jeweiligen Grenzen, jeweiligen Winkel-Bereichen ist im vorliegenden Zusammenhang zu verstehen, dass für jeden steuerbaren Reflektor ein eigener Signalpfad mit den beschriebenen physikalischen, elektrischen und geometrischen Eigenschaften vorliegt, die für jeden Reflektor im System analog zueinander definiert sind.

Wenn mehrere steuerbare Reflektoren an mehreren Orten montiert sind und dementsprechend betrieben werden, welche dazu eingerichtet sind, dieselbe Fläche auszuleuchten, an welcher der Empfänger angeordnet ist, so kann eine erhöhte Feldstärke für den Empfänger bereitgestellt werden und dadurch die Systemverfügbarkeit verbessert werden.

Es handelt sich bei der Anordnung nicht um eine reine Aneinanderreihung von mehreren Reflektoren, denn die genannte Konfiguration der Reflektoren erlaubt darüber hinaus eine entsprechend kombinierte, gemeinsam Konfiguration.

Eine derartige gemeinsame Konfiguration kann in einer Konfigurations-Vorrichtung erfolgen, welche ferner vom Kommunikationssystem umfasst ist, und dazu eingerichtet ist, den ersten und den zumindest einen zweiten Reflektor entsprechend ansteuert.

Dazu wird die Geometrie der Anordnung, beispielsweise in einem Raum, erfasst und in eine entsprechende Verteilung der Reflexions-Eigenschaften der steuerbaren Reflektor-Elemente der Reflektoren mithilfe geometrischer Operationen umgerechnet.

Der erste und der zumindest eine zweite Reflektor weisen jeweils steuerbare Reflektor-Elemente mit jeweilig einstellbaren Reflexions-Faktoren auf. Durch eine entsprechende Ansteuerung der angeordneten Reflektor-Elemente können die Reflexions-Eigenschaften des Reflektors beispielsweise winkelabhängig eingestellt werden, welche mithilfe einer Antennen-/ Reflektor-Apertur darstellbar ist.

Die relative Längendifferenz kann beispielsweise auf die erste oder zweite Länge bezogen werden, oder optional auch auf die Länge des kürzesten, direkten Übertragungspfades vom Reflektor zum Empfänger.

In einer Weiterbildung der Erfindung ist es vorgesehen, dass die jeweilige relative Längendifferenz zumindest 30% und bevorzugt zumindest 50% beträgt.

In einer Weiterbildung der Erfindung ist es vorgesehen, dass das System in einem Raum angeordnet ist.

In einer Weiterbildung der Erfindung ist es vorgesehen, dass eine jeweilig gedachte Sichtlinie mit einer jeweilige Sichtlinien-Länge zwischen dem Sender und dem Empfänger gebildet ist, und ein jeweilig gedachtes Dreieck aus der jeweiligen ersten Länge, der jeweiligen zweiten Länge und der jeweiligen Sichtlinien-Länge einen jeweiligen stumpfen Winkel am Empfänger aufweist.

Die Aufgabe wird auch durch ein System eingangs genannter Art gelöst, wobei der erste und der zumindest eine zweite Reflektor ferner dazu eingerichtet sind, das jeweilige Signal innerhalb eines Winkel-Bereichs von einer jeweiligen ersten Grenze zu einer jeweiligen zweiten Grenze mit jeweiligen winkelabhängigen Reflexions-Faktoren zu reflektieren, wobei der jeweilige Signalpfad des jeweilig reflektierten Signals an der jeweiligen ersten Grenze eine jeweilige erste Länge aufweist, und der jeweilige Signalpfad des jeweiligen reflektierten Signals an der jeweiligen zweiten Grenze eine jeweilige zweite Länge aufweist, und der jeweilige Signalpfad des jeweilig reflektierten Signals in der jeweiligen Mitte zwischen der jeweiligen ersten und der jeweiligen zweiten Grenze eine jeweilige mittlere Länge aufweist, und eine jeweilige gedachte Sichtlinie mit einer jeweiligen Sichtlinien-Länge zwischen dem Sender und dem Empfänger gebildet ist, und ein jeweilig gedachtes Dreieck aus der jeweiligen ersten Länge, der jeweiligen zweiten Länge und der jeweiligen Sichtlinien-Länge einen jeweiligen stumpfen Winkel am Empfänger aufweist, und der erste und der zumindest eine zweite Reflektor dazu eingerichtet sind, den jeweiligen winkelabhängigen Reflexions-Faktor an der jeweiligen ersten Grenze gegenüber der jeweiligen mittleren Länge zu vergrößern und den jeweiligen winkelabhängigen Reflexions-Faktor an der jeweiligen zweiten Grenze zu verringern.

Die Erfindung wird nachfolgend anhand eines in den beigeschlossenen Zeichnungen dargestellten Ausführungsbeispiels näher erläutert.

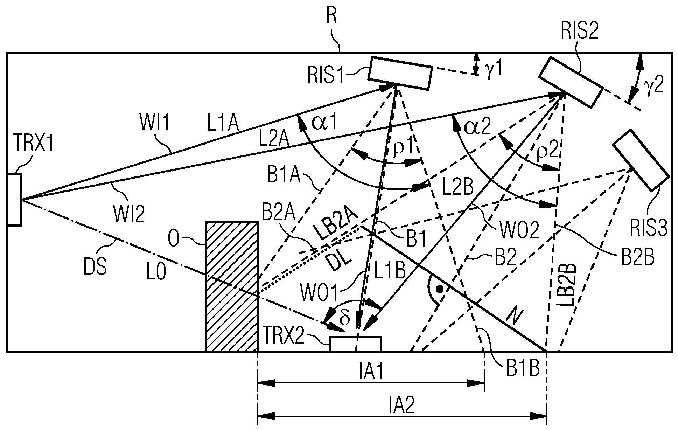

Die Figur zeigt ein erstes Ausführungsbeispiel der Erfindung.

Zunächst ist ein drahtloses Kommunikationssystem nach dem Stand der Technik gezeigt, welches einen Sender TRX1, einen Empfänger TRX2 und einen elektronisch steuerbaren Reflektor RIS1 umfasst.

Ein Signal WI1 kann vom Sender TRX1 zu einem Reflektor RIS1 gesendet werden und weiter als Signal WO1 zu einem Empfänger TRX2 reflektiert werden, wobei das Signal Längen L1A und L1B zurücklegt.

Der Reflektor weist einen steuerbaren Bereich ρ1 auf.

Durch die Anordnung von Sender TRX1, Reflektor RIS1 und Empfänger TRX2 wird gemeinsam mit einem Montagewinkel γ1 des Reflektors ein effektiver Winkelbereich α1 für den Reflektor RIS1 gebildet.

Der Empfänger TRX2 kann innerhalb einer ausgeleuchteten Fläche IA1 angeordnet sein, in welcher mithilfe des Reflektors RIS1 ein Empfang des vom Sender TRX1 gesendeten Signals erfolgen kann.

Es ist ferner ein erfindungsgemäßes drahtloses Kommunikationssystem gezeigt, welches einen Sender TRX1, einen Empfänger TRX2 und einen elektronisch steuerbaren Reflektor RIS2 umfasst und in einem Raum R angeordnet ist.

Der Sender TRX1 ist dazu eingerichtet, ein Signal WI2 in Richtung des Reflektors RIS2 zu senden.

Der intelligente, elektronisch steuerbare Reflektor RIS2 ist dazu eingerichtet, das Signal vom Sender TRX1 zu empfangen und weiter als Signal WO2 in Richtung des Empfängers TRX2 zu reflektieren.

Der Signalpfad B1 des reflektierten Signals in der Mitte zwischen der ersten und der zweiten Grenze B1A, B1B des ersten Reflektors RIS1 weist eine mittlere Länge auf.

Der Reflektor RIS2 weist einen steuerbaren Bereich ρ2 auf, welcher dem steuerbaren Bereich ρ1 des Reflektors RIS1 entsprechen kann.

Durch die Anordnung von Sender TRX1, Reflektor RIS2 und Empfänger TRX2 wird gemeinsam mit einem Montagewinkel γ2 des Reflektors, gemessen gegenüber der Horizontalen des Raums R, ein effektiver Winkelbereich α2 für den Reflektor RIS2 gebildet.

Es ist in der Figur erkennbar, dass der effektive Winkelbereich α2 für den Reflektor RIS2 deutlich über dem effektiven Winkelbereich α1 für den Reflektor RIS1 liegt.

Daher ist die ausgeleuchtete Fläche IA2 durch den Reflektor RIS2 größer als die ausgeleuchtete Fläche IA1 durch den Reflektor RIS1.

Es ist klar, dass eine Übertragung auch in umgekehrter Richtung erfolgen kann, wenn bei Sender und Empfänger jeweilige Transceiver-Funktionen vorliegen.

Der Reflektor RIS2 ist ferner dazu eingerichtet, das Signal innerhalb eines Winkel-Bereichs von einer ersten Grenze B2A zu einer zweiten Grenze B2B mit winkelabhängigen Reflexions-Faktoren zu reflektieren.

Der Signalpfad des reflektierten Signals an der ersten Grenze B2A weist eine erste Länge LB2A auf.

Der Signalpfad des reflektierten Signals an der zweiten Grenze B2B weist eine zweite Länge LB2B auf.

Der Signalpfad B2 des reflektierten Signals in der Mitte zwischen der ersten und der zweiten Grenze B2A, B2B des zweiten Reflektors RIS2 weist eine mittlere Länge auf.

Eine relative Längendifferenz DL zwischen der ersten Länge LB2A und der zweiten Länge LB2B beträgt zumindest 20%, optional zumindest 30% und bevorzugt zumindest 50%.

Die relative Längendifferenz DL kann beispielsweise auf die erste oder zweite Länge LB2A, LB2B bezogen werden, oder optional auch auf die Länge L2B.

Die relative Längendifferenz DL kann beispielsweise gebildet werden, indem eine Normale N auf den Signalpfad B2 des reflektierten Signals in der Mitte zwischen der ersten und der zweiten Grenze B2A, B2B gelegt wird, wobei die Normale N durch den Schnittpunkt der zweiten Grenze B2B und jener Ebene verläuft, welche durch den Empfänger TRX2 gebildet wird, wie der Boden des Raums R.

Jener Anteil auf der Grenze B2A, welcher zwischen dem Schnittpunkt der ersten Grenze B2A und der Normalen N festgelegt wird, sowie jener Ebene, welche durch den Empfänger TRX2 gebildet wird, wie der Boden des Raums R, oder auch durch einen Schnittpunkt mit einem Hindernis-Objekt O, kann als relative Längendifferenz DL festgelegt werden.

Der Reflektor RIS2 ist außerdem dazu eingerichtet, den Reflexions-Faktor winkelabhängig an der ersten Grenze B2A gegenüber der mittleren Länge LB2 zu vergrößern und den Reflexions-Faktor winkelabhängig an der zweiten Grenze B2A zu verringern.

Alternativ oder zusätzlich kann eine gedachte Sichtlinie DS mit einer Länge der Sichtlinien L0 zwischen dem Sender TRX1 und dem Empfänger TRX2 gebildet sein.

Ferner kann ein gedachtes Dreieck aus der ersten Länge L2A, der zweiten Länge L2B und der Sichtlinien-Länge L0 einen stumpfen Winkel δ am Empfänger TRX2 aufweisen.

Der Empfänger TRX2 kann innerhalb einer ausgeleuchteten Fläche IA2 angeordnet sein, in welcher mithilfe des Reflektors RIS2 ein Empfang des vom Sender TRX1 gesendeten Signals erfolgen kann.

Dieselben Betrachtungen gelten für einen weiteren, zweiten steuerbaren Reflektor RIS3, welcher an einem anderen Ort im Raum R montiert ist und dementsprechend betrieben wird, und welcher ferner dazu eingerichtet ist, dieselbe Fläche IA2 auszuleuchten, um eine erhöhte Feldstärke für den Empfänger TRX2 bereitzustellen und dadurch die Systemverfügbarkeit zu verbessern.

Die Konfiguration der Reflektoren RIS2, RIS3 erfolgt kombiniert, also gemeinsam.

Eine derartige gemeinsame Konfiguration kann in einer Konfigurations-Vorrichtung mit einem Prozessor und einem Speicher erfolgen (ist in der Figur nicht gezeigt), welche den ersten und den zumindest einen zweiten Reflektor entsprechend ansteuert.

Dazu kann die Geometrie der Anordnung im Raum R erfasst werden und in eine entsprechende Verteilung der Reflexions-Eigenschaften für die steuerbaren Reflektor-Elemente der Reflektoren RIS2, RIS3 mithilfe mathematischer, geometrischer Operationen umgerechnet werden.

Sind die Positionen des Senders TRX1, der Reflektoren RIS2, RIS3 und des Empfängers TRX2 - bezogen auf die Wellenlänge der Kommunikationsfrequenz des Übertragungssystems - nicht ausreichend genau bekannt, so kann die Konfiguration von der Reflektoren RIS2, RIS3 beispielsweise durch ein Optimierungsverfahren unterstützt werden, welches die Empfangsleistung an am Empfänger TRX2 maximiert.

### Bezugszeichenliste:

- γ1, γ2: Montagewinkel des intelligenten Reflektors
- ρ1, ρ2: steuerbarer Bereich des intelligenten Reflektors
- B1, B2: Bereichs-Mitte des steuerbaren Bereichs des intelligenten Reflektors
- B1A, B1B, B2A, B2B: Länge an der Begrenzung des steuerbaren Bereichs des intelligenten Reflektors
- DL: relative Längen-Differenz
- DS: gedachte Sichtlinie durch Hindernis
- IA1, IA2: ausgeleuchtete Fläche
- L1A, L1B, L2A, L2B: Teil-Länge der Übertragungsstrecke
- LB2A, LB2B: kürzeste, direkte Länge der Übertragungsstrecke
- N: Normale auf Bereichs-Mitte
- O: Hindernis-Objekt
- R: Raum
- RIS1-RIS3: intelligenter, steuerbarer Reflektor
- TRX1, TRX2: Transceiver
- WI1, WI2: eingehende Welle
- WO1, WO2: ausgehende Welle
- α1, α2: effektiver Winkelbereich des intelligenten Reflektors
- δ: stumpfer Winkel

## Patentansprüche

1. Drahtloses Kommunikationssystem, umfassend einen Sender (TRX1), einen Empfänger (TRX2) und einen ersten elektronisch steuerbaren Reflektor (RIS2) an einem ersten Ort und zumindest einen zweiten elektronisch steuerbaren Reflektor (RIS3) an zumindest einem zweiten Ort, wobei der Sender (TRX1) dazu eingerichtet ist, ein jeweiliges Signal in Richtung des ersten Reflektors (RIS2) und des zumindest einen zweiten Reflektors (RIS3) zu senden, und der erste und der zumindest eine zweite Reflektor (RIS2, RIS3) dazu eingerichtet sind, das jeweilige Signal zu empfangen und in Richtung des Empfängers (TRX2) zu reflektieren, **dadurch gekennzeichnet, dass** der erste und der zumindest eine zweite Reflektor (RIS2, RIS3) ferner dazu eingerichtet sind, das jeweilige Signal innerhalb eines Winkel-Bereichs von einer jeweiligen ersten Grenze (B2A) zu einer jeweiligen zweiten Grenze (B2B) mit jeweils winkelabhängigen Reflexions-Faktoren zu reflektieren, wobei der jeweilige Signalpfad des jeweilig reflektierten Signals an der jeweiligen ersten Grenze (B2A) eine jeweilige erste Länge (LB2A) aufweist, und der jeweilige Signalpfad des jeweilig reflektierten Signals an der jeweiligen zweiten Grenze (B2B) eine jeweilige zweite Länge (LB2B) aufweist, und der jeweilige Signalpfad des jeweilig reflektierten Signals in der jeweilige Mitte zwischen der jeweiligen ersten und der jeweiligen zweiten Grenze (B2A, B2B) eine jeweilige mittlere Länge (LB2) aufweist, und eine jeweilige relative Längendifferenz (DL) zwischen der jeweiligen ersten Länge (LB2A) und der jeweiligen zweiten Länge (LB2B) zumindest 20% beträgt, und der erste und der zumindest eine zweite Reflektor (RIS2, RIS3) gemeinsam dazu eingerichtet sind, den jeweiligen winkelabhängigen Reflexions-Faktor an der jeweiligen ersten Grenze (B2A) gegenüber der jeweiligen mittleren Länge (LB2) zu vergrößern und den jeweiligen winkelabhängigen Reflexions-Faktor an der jeweiligen zweiten Grenze (B2A) zu verringern.

2. System nach dem vorhergehenden Anspruch, wobei die jeweilige relative Längendifferenz (DL) zumindest 30% und bevorzugt zumindest 50% beträgt.

3. System nach einem der vorhergehenden Ansprüche, wobei das System in einem Raum (R) angeordnet ist.

4. System nach einem der vorhergehenden Ansprüche, wobei eine jeweilig gedachte Sichtlinie (DS) mit einer jeweilige Sichtlinien-Länge (L0) zwischen dem Sender (TRX1) und dem Empfänger (TRX2) gebildet ist, und ein jeweilig gedachtes Dreieck aus der jeweiligen ersten Länge (L2A), der jeweiligen zweiten Länge (L2B) und der jeweiligen Sichtlinien-Länge (L0) einen jeweiligen stumpfen Winkel (δ) am Empfänger (TRX2) aufweist.
